# EUROPEAN PATENT APPLICATION

(11) **EP 3 629 279 A1**
(43) Date of publication of application: **01.04.2020**
(21) Application number: 18197248.0
(22) Date of filing: 27.09.2018
(51) Int. Cl.: G06Q 30/02

(54) **METHODS, ARRANGEMENTS AND SYSTEM RELATED TO EXCHANGING USER-RELATED DATA**

(71) Applicant: Networked Products and Marketing GmbH, 64295 Darmstadt (DE)
(72) Inventor: Nazari Shirehjini, Ali Asghar, 64395 Darmstadt (DE)
(74) Representative: Patentanwälte Bressel und Partner mbB

(57) **Abstract**

The invention relates to a method for accumulating user-related data, comprising:
- accumulating initial data (U) related to a user;
- analyzing said initial data (U) and deriving at least one potential demand of the user;
- generating a dataset (D) including information on the potential demand as well as at least some further information related to the user,
wherein generating the dataset (D) includes providing an access restriction, so that the information on the potential demand is accessible by further parties (26), but that at least some of the further information of the dataset (D) are only accessible when an access condition has been met,
wherein the method further comprises:
- forwarding the dataset (D) to a digital marketplace (21).

Further, the invention relates to an arrangement for accumulating user-related data, a method for accessing user-related data and a method and system for exchanging user-related data.

## Description

The invention relates to a method and arrangement for accumulating user-related data, a method and arrangement for accessing user-related data as well as a method and system for exchanging user-related data.

It has been known to analyze user-related data for various purposes and in particular to allow further parties, such as companies, to provide advertisements and offers to potentially interested users. In this context, numerous problems have occurred. These relate, first of all, to privacy requirements associated with the data e.g. by ensuring that a user is aware of which data are actually forwarded to further parties. Moreover, it has sometimes been difficult to reliably infer from the data on the actual interests of a user. Accordingly, companies cannot be sure that contacted users are actually interested in their offers.

Still further, from the user's perspective, it has been difficult to financially profit from data associated with him/her. In recent years, concepts have been suggested relating to a so-called "personal data economy". However, these still suffer from drawbacks e.g. in terms of satisfying privacy requirements associated with the user-data. Technological background in this regard can be found in US 2014/0344015, WO 2014/123651 A1 and US 2017 022 1081 A1.

It is an object of the invention to provide an alternative solution for exchanging user-related data, which is preferable both from a user's as well as a further parties' perspective.

This object is solved by the aspects according to the attached independent claims. Advantageous embodiments are defined in the dependent claims.

In the following, numerous aspects of the invention will be discussed. It is to be understood that any variants, further developments, aspects and explanations relating to method-features also apply to similar arrangement- and system-features, and vice versa. In particular, any method may be realised by any system and any arrangement discussed below. If not evident or indicated otherwise, any of the following steps or functions may be carried out in an automated manner i.e. without requiring dedicated further user inputs or interactions. This relates in particular to an analysis of data and/or the generation of datasets. For doing so, any of the units discussed herein with regard to data processing may be (e.g. part of) a computing unit. In particular, any of the steps or measures of such units may be carried out by means of a data processing unit, such as a microprocessor. Further, when referring to method steps herein, this is not necessarily meant to define a specific sequence, if not mentioned or evident otherwise. For example, different steps may also be carried out in parallel to one another.

According to a basic idea of the invention, user data are accumulated so as to increase their relevance from a further parties' perspective. Note that in the context of the present disclosure, a further party may generally be considered to be a party that seeks to advertise e.g. products and/or services to potentially interested users. For doing so, data may be accumulated relating to the behaviour (e.g. activities) of a user or to the environment associated with a user. Such data may for example be gathered with a so-called smart-home-network. In the context of this disclosure, the term "home" is not used in a limiting manner (e.g. is not restricted to a private home) but also relates to e.g. commercial and/or office environments.

By collecting data in such a manner and analysing said data with regard to potential demands of a user, there is a higher probability that the data reflect an actually relevant demand of the user and in particular a current demand. Accordingly, advertisement addressed to said user and referring to such a demand has a higher chance of being considered by the user (i.e. is more likely to meet the user's actual interests and needs). The solution suggested herein thus helps to bring further parties, such as goods or service providers, into contact with actually interested users.

Still further, according to some embodiments, the initial data may be generated with limited or even no active input from a user. Instead, it may be gathered with help of a so-called smart home network. This is beneficial from a user's perspective in that data are automatically determined.

Still further, a basic idea of the invention relates to the way in which user-related data are provided to a further party. Specifically, it is suggested to use access restrictions, so that some data may be accessed by further parties right away, for example to allow said parties to identify possibly interested users, whereas other data are not immediately accessible. Instead, these access restricted data may only be accessible if an access condition has been met, said access condition in particular being associated with a monetary value. This way, a further party can identify users (or user datasets) that might be interested, but only access the whole of the data which is e.g. needed to actually prepare an offer to the user, if the access condition has been satisfied. The latter may involve having to make a payment to the user. Overall, this allows the user to financially profit from offering his data to further parties. The user thus also has an incentive to offer his data and also, according to at least some embodiments, to ensure that the quality of the data is sufficient. On the other hand, contrary to existing solutions, it is the user that at least partially financially profits from his data and not some company that with or without the user's knowledge has gained access to his data.

Moreover, the user's privacy may at least partially be maintained because not all of his data are immediately accessible from outside. It is even possible to ensure a particularly high level of privacy and even the anonymity of the user by using a data exchange handler that forwards data of the further party to the user. In this case, the further party preferably does not receive the full contact data or any other full identification data of the user, but only the data exchange handler which may act as a communication agent.

As a further advantage, user-related datasets may be offered to further parties which contain already analysed data. This is beneficial from an interested party's point of view, since said party does not have to perform the data analysis themselves. Additionally or alternatively, this allows for not all or even none of the initially accumulated data (also referred to as "raw data" herein) to be provided to the further party, but e.g. only the result of the analysis of said data. This may further help to secure a user's privacy.

In more detail, a preferably largely or fully automated method for accumulating user-related data is suggested, comprising:
- accumulating initial data related to a user;
- analyzing said initial data and deriving at least one potential demand of the user (based on said analysis);
- generating a dataset including information on the potential demand as well as at least some further information related to said user,
wherein generating the dataset includes providing an access restriction, so that the information on the potential demand is accessible by further parties, but that at least some of the further information of the dataset are only accessible when an access condition has been met,
wherein the method further comprises:
- forwarding the dataset to a digital marketplace.

Moreover, an arrangement (e.g. a computer system or a computer network) for accumulating user-related data is suggested, comprising:
- at least one sensing unit that is configured to generate initial data related a user;
- an analyzing unit that is configured to analyze said initial data and to derive at least one potential demand of the user (based on said analysis);
- a dataset generating unit that is configured to generate a dataset which includes information on the potential demand as well as at least some further information related to said user,
wherein the dataset generating unit is further configured to provide an access restriction, so that the information on the potential demand is accessible by further parties, but that at least some of the further information of the dataset are only accessible when an access condition has been met, and wherein the arrangement is configured to forward the dataset to a digital marketplace.

The initial data may comprise at least one of:
- data relating to the behaviour of the user;
- data relating to the state of an environment associated with the user;
- data relating to a physical state of the user (e.g. captured by fitness trackers, physiological sensors or heart rate monitors).

A further party may be represented by any party that is interested in contacting the user, e.g. for advertising products to him/her or making offers. A further party may generally be a goods or service provider, a commercial entity and/or a company. A further party may in this disclosure thus also be referred to as a provider. Numerous parties may contact a user and e.g. each provide offers to him based on the identified demand. Differently put, numerous parties may compete with one another for being chosen by a user and with respect to same demand identified for said user. Also, offers and/or advertisements presented to a user may have a limited lifespan and e.g. expire after a predetermined time period. The offers may be sent to device connected or not being connected to a smart home network, for example to a (tablet) PC, smartphone or another terminal (communication) device.

A user may be represented by any entity that is addressable e.g. by a further party and/or for which user-related data can be accumulated. For example, a user may be a natural person or a group of natural persons. Alternatively, a user may be a device or electronic network, such as a smart home network, which is associated with at least one natural person.

A smart home network generally refers to a digital and/or electronic (communication) network that connects devices to one another and/or to a central unit (e.g. to a central computer). This way, information may be gathered on the states of the devices. Such devices may be for example household devices (e.g. a lamp, a heating device, a climate control and/or AC device, a fridge, a laundry machine, a stove, a microwave) or entertainment and/or data processing devices (a TV, a PC, a smartphone, a gaming device).

Further, at least one sensing unit may be part of or connected to the smart home network and gather information on a state of the environment e.g. of said network (e.g. a state of the building or room(s) covered by said network). Alternatively, the sensing units may be connected to and in particular integrated into any of the devices noted above in order to determine their states. The sensing units are preferably hardware devices (e.g. actual sensors).

The behaviour of the user may be a current behaviour that is for example sensed by at least one sensing unit. Generally, the behaviour may relate to a position of the user within a home or building, to movements of the user and/or to a certain type of activity such as cooking, bathing or using entertainment equipment. Additionally or alternatively, the behaviour may relate to a behavioural pattern that has been learned, for example, by an analysing unit based on the user's behaviour in the past. This may relate to the behaviour of the user indicating that he might plan to initiate a food ordering process (e.g. since he has not used the kitchen within a certain time span and/or typically orders food on a certain week day).

The state of the environment may, for example, relate to conditions of the environment, such as a temperature or a humidity and/or may relate to a state of devices of said environment (in particular devices according to the above examples, wherein the states may e.g. refer to operating parameters such as a power or water consumption). The environment may generally be a building, apartment, flat, house, commercial or office space. The environment may comprise a smart home network and/or any of the above-discussed devices.

As noted above, the analysis of the data may include identifying behavioural patterns that e.g. have been associated with user demands in the past. Additionally or alternatively, the analysis of the data may include comparisons to demand-indicators that have e.g. been identified with respect to other users and/or other smart home networks. Specifically, a knowledge database may be provided including information on which data and in particular combination of data indicate a potential demand of the user. Said knowledge database may be updated, e.g. based on feedback from the user with regard to identified demands (e.g. whether these are correct or not) and/or based on experiences with respect to other users or environments. Such a knowledge database may be part of or connected to the analysing unit.

The initial data may be produced by at least one sensing unit. The accumulation or, differently put, the collecting of said data (e.g. in the sense of at least temporarily storing them in an accumulated manner, e.g. on a common storage device) as well as their analysis may be carried out by analysing unit. Accordingly, the analysing unit may also have a data accumulation function. Specifically, a sensing unit may be a hardware device which actually produces initial data, whereas the analysing unit may be a software application or a hardware device comprising such a software application for (optionally) collecting said initial data and analysing them.

The analysing unit may e.g. be provided in form of a hardware device (e.g. a PC) or a software application run on a hardware device, such as an app for a smartphone or a PC. The analysing unit may determine any of the above aspects (i.e. user behavior, physical state and/or state of the environment) by being provided with the initial data. Alternatively, it may actively accumulate such data itself, e.g. by collecting them from sensing units.

The analysing unit and dataset generating unit may be comprised by the same hardware device and/or the same software application.

An analysing unit may generally be configured to (e.g. exclusively) identify a certain type or group of demands, such as food-related demands, household-related demands, health-related demands, financial services-related demands, insurance-related demands entertainment-related demands, mobility-or travel-related demands and the like. By choosing respective analysing units (e.g. by installing them on a computer device or smartphone), a user may control which type of offers he might receive from further parties.

A user may generally have the opportunity to select analysing units e.g. by installing them on a smartphone or other data processing device (such as a PC). Additionally or alternatively, a user may have the opportunity to define operating conditions of an analysing unit, such as which devices/sensing units of a smart home network should be considered or during which time of the day or week the analysing unit should operate. Moreover, a user may have the opportunity to provide feedback on the performance of an analysing unit. According to one example, a user may define rules or settings according to which the analysing unit may accumulate and/or analyse the initial data e.g. by defining which sensing units may be accessed by the analysing unit (i.e. activating or deactivating sensing units).

Information comprised by the dataset may be provided in form of data or sub-datasets of the overall dataset. The information on the potential demand of the user may e.g. comprise tags or general identification information with regard to the potential demand derived during the analysis. This way, a plurality of datasets may be browsed with help of search terms in order to identify potentially relevant datasets.

A dataset may also be referred to as a smart contract. The smart contract may include regulations with respect to which data are accessible based on which access conditions. The smart contract may also include software means (e.g. software modules or protocols) to ensure that the desired data exchange is carried out in case the access conditions are met. A dataset may only be used once by a party for (directly or indirectly) contacting a user. For example, a dataset may enable a communication of the party with the user only once, e.g. by including contact information (e.g. in form of a code) that only works once.

Similarly, a data exchange handler discussed below may only once enable a party to forward data to the user after having fulfilled the access condition.

The access condition may be predefined (e.g. automatically) for a plurality or even all of the datasets to be generated. Alternatively, it may individually be set for each dataset e.g. based on the contents of a dataset (for example based on the amount or data stored therein and/or the type of potential demand of said dataset). As noted below, the access condition may be associated with a monetary value, such that the further information may only be accessed if e.g. a payment with said monetary value has been received.

The further information related to said user may e.g. be information which further specify the potential demand, e.g. providing further details not only on the type but also the extent, location and/or timeframe of the demand (for example how many items a user might order, in which region the user is located and what might be the preferred time frame for receiving ordered items). Generally speaking, the further information may thus allow a further party to prepare a more precise or appropriate for all advertisement.

The further information may be accessible all at once as soon as the access condition is met. Alternatively, as noted below, the access condition may include numerous levels and, depending on which level has been satisfied, only some of the further information may be accessible.

According to one example, the further information do not include full contact details or identification information of the user and/or generally allow the user to stay it is partially anonymous. The contrary (i.e. the further information containing such details) is, however, equally possible. Even in case of missing contact details, a further party may be able to prepare a more appropriate offer or advertisement based on the further information and send said offer or advertisement to a data exchange handler. The data exchange handler may be a unit (e.g. software unit or server) configured to transfer information between the further party and the user in the sense of a communication agent and without the further party necessarily having to receive the full contact details of the user. This way, the user may at least partially stay anonymous. Only if he accepts the offer or reacts to the advertisement in a certain way, may a direct communication between the further party and the user be enabled (e.g. without the data exchange handler acting as a communication agent and/or by providing full contact details of the user). This is particularly advantageous in case privacy-sensitive demands are identified, such as health or financial demands.

The stepwise data access (i.e. the further information only being accessible if an access condition has been met) suggested herein allows to specifically set and control which data are actually accessible by further parties. Specifically, it may be prevented that all of the initially accumulated data (or even any accumulated initial data at all) enter the digital marketplace or, differently put, leave a smart home network. Instead, generated datasets may largely or fully be based on the result of the analysis, such that the accumulated initial data, which may also be referred to as raw data, do not have to enter the digital marketplace. Differently put, from the perspective of the digital marketplace, the data accumulation and preferably also the analysis is carried out remotely or decentralised, for example at a user's home and/or in the context of a smart home network.

This is different from existing solutions in which not yet analysed (raw) data are directly transferred to further parties which may then analyse them without the user's control. Accordingly, the present solution helps to ensure the user's privacy and his/her control over the data. This is in particular valid if the user may, according to embodiments of the present invention, choose the analysing unit and/or its operating conditions. This way, the user may at least indirectly determine, which data are analysed with respect to which potential demands.

The digital marketplace may be provided as or on a server or as or within a digital database or data collection. The digital marketplace may be connected to further parties and/or to the data generating unit by communication connections, e.g. via Internet or LAN connections. In the context of the present invention, it is, however, not mandatory that at least the data generating unit (and/or sensing unit and/or analysing unit and/or smart home network) is directly connected to the marketplace and/or to the Internet or generally to an exterior network. Rather, the datasets may also be transferred in an off-line manner and/or with help of data storage devices, such as USB sticks, to the digital marketplace or to a communication terminal connected to the digital marketplace.

In general, the client- or user-side discussed below or generally the smart home network may thus represent a sandbox or be operated according to a sandbox. In the present technical field, a sandbox may refer to a software or computer system being operated remotely from and independent of further software or computer systems. This further helps to improve the user's privacy by limiting the danger of an unwanted external access to e.g. a smart home network of the user.

In general, a gateway may further be provided between the client- or user-side and/or the dataset generating unit and the digital marketplace. The gateway may be configured to forward the generated datasets to the digital marketplace, e.g. by providing a communication link between the dataset generating unit and/or smart home network and the digital marketplace. The gateway may comprise or be provided as a software module and/or a hardware component, e.g. for connecting to a physical or wireless communication link.

The digital marketplace may have standards with regard to which datasets can be gathered therein. These standards may relate to a minimum confidence level associated with the datasets and/or to a minimum reputation level with regard to a data generating unit and/or analysing unit by means of which the dataset has been generated. The reputation level may e.g. be generated based on user feedback with regard to the accuracy of the demand identification and/or feedback from a further party with regard to the contents of the dataset. The feedback of a further party may, in addition or alternatively, relate to whether or not a user has accepted an offer that has been prepared based on said dataset.

Generally speaking, the digital marketplace may be part of or realised as an online marketplace or, differently put, an online e-commerce marketplace. The datasets may form assets which are traded within said marketplace in the sense of the further parties e.g. making payments to access the initially access restricted information. This is also referred to herein as purchasing datasets. Also, the marketplace may allow for browsing the datasets gathered therein, for example in order to identify potentially relevant datasets from a further parties' perspective.

It may be up to the user to decide, whether or not a dataset is actually forwarded to a digital marketplace. For example, a user may be notified that datasets have been generated and may then be asked to either allow said dataset to be forwarded to (i.e. offered or, differently put, published at) the marketplace or not. In this context, the user may also set a price to be paid for fulfilling the access condition (see below). This way, the user may be in control with regard to which datasets are actually forwarded to and thereby published at the marketplace. On the other hand, the user may set conditions (e.g. for controlling the analysing unit and/or dataset generating unit) according to which datasets are forwarded to the digital marketplace without requiring further user input. Accordingly, the user may set a level of automation with regard to the generating of datasets as well as forwarding them to the digital marketplace.

Additionally or alternatively, the user may be informed when a demand has been identified. The user may then be asked to confirm, whether this demand is correct or not. Only afterwards may the dataset be generated and/or forwarded to the digital marketplace. Such a request for confirmation may at least take place when a demand is not unambiguously identified and/or a low confidence value with regard to said demand has been determined.

In the context of the present disclosure, numerous different kinds of data may be considered. Some of these have been discussed above and some are going to be discussed with respect to the following further aspects and embodiments. In brief, at least the following data may be considered, wherein the explanations thereof a merely explanatory and are not to be understood in a limiting manner.
- initial data: As noted above, these may be user-related data which potentially allow to identify a demand of the user.
- datasets: As noted above, this may also be referred to as smart contracts and include publicly accessible and private (i.e. access restricted) data and generally contain information regarding a potential demand of a user.

The following may, alone or in any combination, be preferably included in a dataset / smart contract:
- demand information (included in a datasets/smart contract): These may be derived based on the initial data and identify a potential demand of the user.
- access condition: This may relate to e.g. a price that has to be paid to access initially restricted data.
- resale-rights: This may particularly relate to intelligent agents discussed below which may act as intermediaries by purchasing and reselling datasets/smart contracts. A resale right may thus define, whether or not such a practice is allowed with respect to a given dataset/smart contract and/or which agent currently owns the right to resell a given dataset/smart contract. An agent may be identified and referenced with help of a globally unique ID, a public key or a digital wallet address.

- Owners list: In this list, each entity or party that has gained access to and/or became at least a temporary owner of the dataset may be stored. An entity or party may be identified and referenced with help of a globally unique ID, a public key or a digital wallet address.
- Conditions for intelligent agents: This may relate to which data are accessible by an intelligent agent, in particular when only acting as an intermediary, and/or which condition has to be satisfied (in particular which price has to be paid to or by) an intelligent agent, in particular when he does not gain full access to a dataset but may only resell it (see below).
- Type of user: Types of user may e.g. be an originator of the dataset, an (intelligent) agent discussed below, an end user, such as a party intending to send offers to a user. A dataset may e.g. include information on what type of user are allowed to purchase or resell the dataset and may generally be configured to determine (e.g. by way of executing program instructions stored within the dataset) which type of user is interested or in possession of the dataset.

According to a further embodiment of the method and arrangement, at least some of the initial data are accumulated with help of at least one sensing unit provided within a defined region (e.g. a defined environment). For example, the sensing unit may be installed as part of or by being connected to any of the devices of a smart home network discussed above. The sensing units may thus be hardware components which sense conditions of the environment or the above-noted devices placed therein. The defined region may be represented by an environment according to any of the above examples and in particular be provided within at least one of a building, an office space or a living space. Additionally or alternatively, the defined region may be a region which is covered by a smart home network.

As a further aspect of the method and arrangement, at least some of the initial data (i.e. the raw data) are kept separate from the generated dataset and/or the digital marketplace (e.g. not incorporated into the dataset and/or not forwarded to the marketplace). Instead, the data comprised by the generated dataset may at least partially, largely or even fully be formed by data derived from analysing the initial data, e.g. by data relating to the potential demand of the user. As previously noted, this is beneficial with regard to protecting the privacy of the user, since at least some of the initial data are not accessible to a further party, even when the access condition has been met.

Additionally or alternatively, (preferably only) an analysis result of the initial data may be included in the generated dataset, but not the initial data themselves. Differently put, the accumulated initial raw data which may concern privacy relevant information about the user may not be included in the generated dataset (i.e. smart contract), but only the analysis result that has been derived based on said initial data. Said analysis result may concern the identified potential demand. Similar to above, this helps to protect the privacy of the user, since preferably no initial data are forwarded to the digital marketplace. Differently put, no additional data may leave a smart home network associated with the user. Instead, it is only the analysis result which might be accessible by further parties, thereby preventing uncontrolled access to the accumulated initial data.

The access condition may generally be associated with a monetary value, for example with a price (i.e. an amount of money) that has to be paid to meet said access condition. The monetary value may be determined according to one of the following:
- an automatic value determination, which may take place independent of any inputs or conditions defined by a user but may e.g. be controlled by the digital marketplace;
- a value determination that is at least partially based on conditions defined by the user, e.g. based on rules or settings that are associated with monetary values and by determining, whether the dataset comprising the access condition fulfils said rules or settings;
- a definition of said value by the user, which may e.g. take place directly based on a user input of the value (i.e. by the user setting a respective price).
According to a further embodiment of the method and device, the access condition has numerous levels, each preferably associated with a monetary value, and wherein the data of the dataset are accessible depending on which level of the access condition has been met. For example, the access condition may have a number of levels each associated with an individual monetary value, said values ranging from a low to a high value.

Depending on which monetary value is provided (i.e. which price is paid), the respective level of the access condition will be met. Each level of the access condition may further be associated with a type, amount or number of data within the dataset which are accessible when the respective level has been met. Thus, depending e.g. on the price that is paid, a different amount of data will become accessible. This opens up further opportunities for a user to financially profit from his data. On the other hand, this may be preferable from a further parties' perspective, since more price levels are available to choose from.

In general, in case an access condition has been met, the further party may also be allowed to contact the user, either directly or indirectly via a data exchange handler discussed below. Thus, the access condition may not only relate to information being provided to a further party but also to the possibility or authorisation to contact the user e.g. in order to provide offers or advertisements. That is, according to an embodiment, a further party is only able and/or authorised to (directly or indirectly) contact the user, if the access condition has been met.

According to a further development, the dataset (or at least some of the datasets) comprise(s) a confidence information, such as a confidence value, relating to a level of confidence with regard to the derived potential demand. According to known manners in the field of computer analysis and computer-generated information, confidence values can be associated with data or information that are computed largely or fully without user-input (e.g. based on data analysis algorithms). Such a value may be derived from statistical analysis or evaluations of the available data and/or based on historic data e.g. concerning the accuracy of a demand determination based on certain available data.

The confidence information may be used for e.g. automatically or according to user-defined conditions set the monetary value of the access condition of a dataset. Additionally or alternatively, the confidence information may be made available to the user (e.g. for setting the price of the access condition) and/or to a further party (e.g. for matching the dataset with an interest profile of said party). Preferably, the confidence information is not access restricted but e.g. available to the further party for the above reasons. Accordingly, the marketplace may also be browsed for datasets fulfilling a minimum confidence level.

Further, according to the method and arrangement, at least some information of the dataset may not be accessible by a further party, even if the access condition has been met, but preferably by a data exchange handler. This may relate, for example, to full contact details of a user. These may only be accessible to e.g. a data exchange handler which then acts as a communication agent and forwards data of the further party (e.g. an advertisement or an offer) to the user. The data of the further party may e.g. identify the dataset for which the access condition has been met, so that the data exchange handler can determine the user associated with said dataset. This further helps to improve the user's privacy.

In this context, it may also be considered that even the data exchange handler does not receive full contact details of the user. Instead, he may only receive an identification information (e.g. a so-called globally unique ID) which specifies e.g. a gateway and/or network or other entity associated with a user. In particular, no or only limited information on the user may be accessed even by the data exchange handler. In order to infer on an actual IP-address of the user, the data exchange handler may have to communicate with a further unit, such as a registration server. The data exchange handler may e.g. send the data received from the further party along with the globally unique ID that has been accessible by satisfying the access condition of a dataset to the registration server which then forwards it to the user or a gateway/network associated with the user. Note that the registration server may not be authorised to access (i.e. read) the transferred data. As noted above, the data exchange handler, on the other hand, may be authorised to at least partially access the transferred data, but not be informed about the actual user's full contact details. These different authorisations of different servers help to ensure the user's privacy.

Such authorisations may be based on encryption, according to which only certain units and in particular certain servers may be able to decrypt the respective data. For example, the data exchange handler may encrypt the contents of a dataset apart from the global unique ID before forwarding it to the registration server which may not be able to decrypt the dataset. Instead, based on the global unique ID, the registration server may forward the dataset to the gateway associated with a user matching the global unique ID, said gateway, however, being able to decrypt the dataset. An example of a suitable encryption protocol is Keberos.

Still further, it should be noted that even when having associated a dataset with a gateway (e.g. by way of the above discussed global unique ID) or in general when having access to contact details of the user, this may not be equivalent to having access to an actual physical address and/or full name or other personal information of the user. Such information may generally be missing and not included in any of the data discussed herein. Instead, such information may only be available to a supervising and/or managing entity that sets up and runs the various systems, servers and units involved the data transfers. However, said entity may keep the information to itself, e.g. by storing them in a database that is not accessible by any of the systems, servers and units discussed herein.

It should further be noted that in case a smart home network or in general a client side is operated in an off-line manner, data, such as offers or advertisements, may be sent by a further party to an electronic database and/or electronic mailbox, which may be at least sporadically accessed by a user. Such databases/mailboxes are preferably provided separately from a data exchange handler.

The data exchange handler may e.g. be provided as an exchange server having (direct or indirect) communication connections to at least one user (e.g. his/her smart home network) and to at least one further party. Also, the data exchange handler may be connected to or comprise the digital marketplace and its datasets. It may allow for data being transferred in one direction (e.g. from a party to a user) or two directions (e.g. also from the user to the party).

According to a further aspect, the actual presentation of an offer or advertisement (e.g. rendering and/or displaying it to a user) may be carried out by a gateway and/or analysing unit or in general by a network (e.g. smart home network) associated with the user. The further party or in general an entity sending the data to the user may, e.g. as an attribute of the message containing the offer or advertisement, require that delivery of said offer or advertisement is confirmed. In the absence of such a confirmation, the payment of the further party for satisfying the access condition may be reversed or delayed.

Generally, the delivery of an offer or advertisement may take a different forms and/or involve different units. For example, the data may be displayed via any of the devices discussed above, such as home appliances or entertainment devices (TV, kitchen or wall displays, smartphone etc.). As a delivery confirmation, it can be determined that during playing the offer/advertisement, the user has been in a position or state, that objectively allowed him to receive the offer/advertisement. For doing so, any of the previous sensing units may be referred to, e.g. for determining a position of the user within a household.

Additionally or alternatively, the (mental) recognition of an offer or advertisement by the user may be used as a delivery confirmation. For doing so, any of the available sensing units may be used to detect attention of the user, e.g. by detecting a current region of interest and/or a viewing direction of the user. For doing so, audio or video data of the user, biophysical user data or even information on a sitting position of the user may be analysed. If these satisfy predetermined requirements, a sufficient attention of the user may be determined and a delivery confirmation may be issued.

Generally, more than one user may be connected to the digital marketplace (i.e. datasets related to various users being storable therein) and/or more than one further party may have access to the digital marketplace. Similarly, the data exchange handler may be configured to transfer data from any out of a plurality of further parties to any out of a plurality of users, and optionally vice versa.

It is generally to be noted that the access condition can be met by more than one party (i.e. by a plurality of further parties). Specifically, a plurality of goods or service providers may fulfill the access condition and, based thereon, be able to prepare and/or forward offers or advertisement to a user. The user may thus, in reaction to his dataset being forwarded to the digital marketplace, receive a plurality of offers and/or advertisements from numerous further parties and may then select therefrom.

Generally, the act of publishing the datasets within a digital marketplace may also be referred to as a user formulating a "request for proposals" (RFP) from further parties. Yet, as these further parties typically have to meet the access condition first in order to be able to make such proposals (i.e. offers or advertisement), a user may financially profit by making his dataset available. On the other hand, the further parties have a higher chance of their offers/advertisements actually reaching a potentially interested user. Thus, even if the further parties have to pay for meeting the access condition, this may be acceptable compared to paying for less focused mass advertising via public websites.

On the other hand, it is also possible that an access condition can only be met by one (e.g. the first) party which thereby receives exclusive access to the further information of the dataset.

The method and arrangement described so far may largely relate to a so called client- or user side, at which user-related data(sets) are generated. The digital marketplace as well as the interactions of the data(sets) and further parties, on the other hand, may relate to a so-called server side. The latter may be connected to or realized as an online environment that is e.g. accessible via the internet. The client side, on the other hand, can but does not have to be connected to the internet (at least not permanently), as long as means are provided for transferring the generated datasets to the digital marketplace. On the other hand, such an Internet connection may be preferable to allow for digital offers/advertisements to be forwarded to a user upon having met an access condition.

As an example of the server side, the invention further relates a preferably largely or fully automated method for providing user-related data, comprising:
- gathering datasets in a digital marketplace, each dataset including information on a potential demand of a user as well as further information related to said user and each dataset including an access restriction, so that the information on the potential demand is accessible by further parties, but that at least some of the further information are only accessible when an access condition has been met; and
- checking whether a further party has met the access condition and if that is the case, providing access to said further information and/or enabling the further party to (directly or indirectly) contact the user e.g. via a data exchange handler.

Similarly, the invention relates to an arrangement for accessing user-related data, comprising:
- a digital marketplace configured to gather datasets, each dataset including information on a potential demand of a user as well as further information related to said user and each dataset including an access restriction, so that the information on the potential demand is accessible by further parties, but that at least some of the further information are only accessible when an access condition has been met; and
- an access control unit (e.g. realised as or comprised by a data exchange handler discussed above, said data exchange handler e.g. being run by a server that comprises a microprocessor) that is configured to check whether a further party has met the access condition and if that is case, providing access to said further information and/or enabling the further party to (directly or indirectly) contact the user e.g. via a data exchange handler.

In more detail, when the access condition is met, the further party may be enabled to contact the user by gaining access to contact information of said user. Thereby, the party may directly contact the user. Alternatively, the party may indirectly contact the user via a data exchange handler and, when meeting the access condition, e.g. receive an authorisation to contact the user which the data exchange handler can check and/or recognise and then facilitate the data transfer.

A party may generally access and browse the digital marketplace on its own and, for example, formulate search requests.

In general, the data exchange handler may be configured to, additionally or alternatively to any further of its functions discussed herein, ensure the safe data transfer. For doing so, the data exchange handler may be configured to execute datasets or program instructions contained in datasets in particular when the datasets correspond to smart contracts.

The smart contract may have a public part to which further encrypted and/or access restricted data are attached. The latter may only be accessible after meeting the access condition. Yet, it should of course be ensured that in case the access condition is met, the data are actually accessible. For doing so, in the context of the present disclosure, the dataset (and in particular smart contract) may fully or in a stepwise manner store the demand information in an access restricted manner, whereas the access condition (in particular in form of purchasing conditions, such as required payments) that is e.g. defined as a code may be public. Interested parties can thus check the code of the access condition to ensure that the data transfer will actually take place. Also, as a test they may use said code to publish and purchase own datasets with the same access condition to see if an access to initially access restricted part is indeed granted after making a payment.

Moreover, safety in terms of the data transfer actually taking place is increased when the datasets (and more specifically smart contracts) are generated according to known and preferably standardised formats that are e.g. not defined by the client side. Instead, they may include information on the used format, which may even be digitally signed by a creator of the used format, thereby improving integrity.

Also, a code necessary to execute a smart contract does not have to be necessarily included in the dataset, but may be referenced e.g. with an identifier contained in the dataset. The data exchange handler may then e.g. download a suitable code in order to execute the smart contract. For doing so, the code may be downloaded from trusted parties, thereby ensuring security.

Still further, the data exchange handler may, in case a user accepts an offer, carry out steps and in particular all relevant steps for completing the ordering process. This particularly relates to a scenario in which an accepted offer is described in a so-called web service description language (WSDL) (i.e. is semantically described). For example, the data exchange handler may in a preferably fully automated manner order the service or goods, automatically include trusted services for performing the financial transactions and/or receiving ordered goods as well as instructing a logistics company, such as a parcel service, to deliver the ordered goods from the trusted service to the user. Such processes may be part of a so-called Web Service Composition and generally allow the data exchange handler to provide further levels of anonymity for the user even throughout the ordering and delivery process.

According to a further embodiment of any of the above methods and arrangements, datasets may be identified (e.g. means of an aggregating unit) that might be of interest to a party based on an interest profile of said party. For example, the party may define an interest profile including information on the type of datasets (e.g. the type of demands) it is interested in and/or a maximum price and/or minimum confidence level it is willing to accept. Based on the not access restricted data of the datasets, datasets may be identified which match said interest profile. The further party may thus be provided with a preselection of potentially relevant datasets in order to perform a selection therefrom. Such a selection may also be performed automatically, e.g. by software applications of the further party which regularly browse the digital marketplace in order to identify and purchase potentially relevant datasets.

As noted above, identifying relevant datasets may be performed by means of an aggregating unit, which may be a software unit or module. The aggregating unit may be part of e.g. the digital marketplace or the data exchange handler. Further parties may install or connect to an aggregating unit (i.e. subscribe thereto) in order to receive potentially relevant pre-selections. The aggregating unit may also be connected to other services, such as knowledge databases which gather information on the type of datasets gathered in the marketplace without seeking to actually contact users. For example, the aggregating unit may provide information on the types of datasets to statistical, financial and/or medical services or companies which may wish to receive information on the gathered datasets but not necessarily want to actually satisfy the access condition and/or contact the user. From a user's perspective, this might not be critical since his private or sensitive data may not be part of the datasets or at least not be accessible without satisfying the access condition.

Additionally or alternatively, at least one so-called intelligent agent may be provided which again may be a software or hardware unit or module and/or be part of the digital marketplace or the data exchange handler. Intelligent agents may be configured to actively offer datasets to further parties e.g. in order to generate offers relating the potential demand of the user. For doing so, they may (preferably automatically) use search engines for identifying e.g. companies or entities which might be interested in purchasing the datasets. From the user's perspective, this is beneficial as potential customers for his datasets are identified (i.e. further parties which might be willing to pay for satisfying the access condition). Thus, according to one embodiment, the intelligent agent may be financially rewarded by the user in case he has found a party that purchases a dataset, e.g. by receiving a share of the payment for satisfying the access condition (i.e. said payment being paid in full by the further party, but not being fully received by the user, since a share is diverted to the intelligent agent).

An intelligent agent may also communicate with aggregating units in order to identify potentially relevant datasets, e.g. in case the intelligent agents have access to or comprise a database with further parties that may act as potential customers for the datasets. Such a database may be provided regardless of whether the intelligent agent communicates with an aggregating unit or not.

Still further, the intelligent agents may even purchase datasets themselves. Note that in this disclosure, purchasing a dataset is used an equivalent for making a payment in order to satisfy the access condition of a dataset. This may allow the intelligent agents to more effectively identify potentially interested further parties, due to having access to more information within the dataset. The intelligent agents may ask for a higher price (i.e. define a new higher priced access condition) from the potentially interested further parties to compensate for their own investment.

An intelligent agent may even create new datasets on their own which are marked by new access conditions, said datasets e.g. being based on datasets purchased by the intelligent agents (see above) or datasets which have been bundled by the intelligent agents.

Overall, intelligent agents may thus help to promote an at least partially automated data exchange and in particular an at least partially automated dataset purchasing procedure. This is in particular valid if the further parties automatically communicate with intelligent agents. For example, the further parties may forward interest profiles to the intelligent agents, said profiles describing datasets that the party is potentially interested in. An intelligent agents may automatically perform purchasing actions of the datasets in case certain conditions (as e.g. defined by an interest profile) are matched by datasets. For doing so, the datasets may include publicly accessible information. These may specify the type of demand or other information that might match with an interest profile but still maintain a certain level of anonymity for the user. Such information may relate to an approximate location or timeframe of the demand.

In general, it may be possible to determine the type of unit or party interested in purchasing a dataset, such as whether this party is a final user (i.e. the further party making the offer to a user) or to an intermediary, such as an intelligent agent. For doing so, the data exchange handler and/or the dataset (i.e. the smart contract) may be configured to make a respective determination.

In case the purchaser is an intermediary, such as an intelligent agent, he can gain full rights to resell the datasets, but may not gain access to the access restricted data, such as the full data on the identified demand and/or further details of the user. In general, it may be possible that resell rights are purchasable separately from the dataset and/or the actual contents thereof (in particular the access restricted contents), for example by an intelligent agent.

A dataset (i.e. smart contract) may generally be accessible (i.e. readable) by meeting the access condition only once or a plurality of time. For example, a predetermined number of accesses may be defined after which a dataset is no longer accessible, may lose its value or be deleted. In case a dataset is accessible only once, it is generally preferred if an intermediary does not gain access to the full data of the dataset, to ensure that a final purchaser (i.e. service/goods provider) actually receives accessible information.

A dataset (i.e. smart contract) may generally be configured to record predetermined events, such as the access condition being met, a change of ownership (e.g. due to being purchased by a party) or changes to further characteristics, such as the price associated with the access condition. In general, a dataset may include a list of its previous owners or purchasers. These may be identified by a globally unique IDs, public keys or a digital wallet address. It may be possible that these information are not publicly accessible, but only accessible by certain parties, such as a data exchange handler.

Further, datasets (i.e. smart contracts) may have a field or, differently put, a characteristic that stores selling rights. As a default characteristic, the originator of the dataset may be stored. Yet, if we resell rights are sold to an agent (e.g. independently of the full dataset), said field includes a reference to the purchasing agent or a (e.g. ordered and/or hierarchical) number of agents, which may be marked by globally unique IDs, public keys or a digital wallet address. Also, it may be possible to store further information, such as the share an agent receives when reselling the dataset (e.g. to a further party).

Additionally or alternatively, it may be possible to store rights of an agent in terms of gaining exclusive or only non-exclusive (i.e. shared) resell rights. The latter may be important for determining the financial compensation of an agent. Finally, a dataset may include a reference to an agent that, in case of purchasing the dataset, takes care of the financial transactions and the selling conditions being met.

Still further, with regard to any of the method steps or arrangement-functions disclosed herein, it may be possible to set a level of automation. In a generally known manner, a level of automation may define to which degree a human/manual input is necessary and to which degree actions may be carried out without human/manual input.

Reference is made to the following article in which the below listed ten levels of automation have been defined: Parasuraman, R., Sheridan, T. B., & Wickens, C. D. (2000). A model for types and levels of human interaction with automation. IEEE Transactions on systems, man, and cybernetics - Part A: Systems and Humans, 30(3), 286-297. In the context of the given disclosure, preferably all or only selected and in particular any combination of these levels may be selectable. Note that these levels refer to a computer, which in the context of the given disclosure may be realised as any computing device or data processing unit, such as a server, which is involved in any of the numerous data processings and data exchanges disclosed herein.
Level 1: The computer offers no assistance, the human must take all decisions and actions.
Level 2: The computer offers a complete set of decision/action alternatives, or
Level 3: narrows the selection down to a few, or
Level 4: suggests one alternative;
Level 5: executes that suggestion if the human approves, or
Level 6: allows the human a restricted time to veto before automatic execution, or
Level 7: executes automatically, then necessarily informs the human, and
Level 8: informs the human only if asked, or
Level 9: informs the human only if it, the computer, decides to.
Level 10: The computer decides everything and acts autonomously, ignoring the human.

According to one example, a level of automation may be set manually e.g. by the user. Additionally or alternatively, a level of automation may be set automatically e.g. by any computing device, such as a server, involved in any of the numerous data processings and data exchanges disclosed herein.

For example, it may be possible to, in an automated manner, identify a quality of the datasets. That is, based on the confidence value discussed above and/or the freshness of the data contained in a dataset and/or a rating or performance level of the analysing units involved in generating the dataset, the level of automation with regard to publishing datasets within the digital marketplace may be adjusted, for example, by the dataset generating unit. Generally, the lower the quality of the dataset, the lower may the level of automation be set. This way, a user can be asked for confirmation whether he really wishes a low-quality dataset to be published. For example, in case a quality below an acceptable threshold is detected, the level of automation may be changed from 10 to 5.

A level of automation may in particular be settable for any of the following:
- the accumulation of initial data;
- the analysis of the initial data;
- the generation of datastets (i.e. smart contracts);
- the setting of a monetary value (e.g. price) of the access condition;
- the publishing of datasets within the digital marketplace.

Finally, the invention relates to a preferably largely or fully automated method for exchanging user-related data, comprising:
- accumulating initial data related to the behaviour of a user and/or to the state of an environment associated with the user;
- analyzing said initial data and deriving at least one potential demand of the user;
- generating a dataset including information on the potential demand as well as at least some further information related to said user,
wherein generating the dataset includes providing an access restriction, so that the information on the potential demand is accessible by further parties, but that at least some of the further information of the dataset are only accessible when an access condition has been met,
wherein the method further comprises:
- forwarding the dataset to a digital marketplace; and
- checking whether a further party has met the access condition and if that is case, providing access to said further information.
Similarly, the invention relates to a system for exchanging user-related data,
comprising:
- at least one sensing unit that is configured to accumulate initial data related to the behaviour of a user and/or to the state of an environment associated with the user;
- an analyzing unit that is configured to analyze said initial data and to derive at least one potential demand of the user;
- a dataset generating unit that is configured to generate a dataset which includes information on the potential demand as well as at least some further information related to said user,
wherein the dataset generating unit is further configured to provide an access restriction, so that the information on the potential demand is accessible by further parties, but that at least some of the further data of the dataset are only accessible when an access condition has been met,
wherein the dataset generating unit is further configured to forward the dataset to a digital marketplace comprised by the system,
and wherein the system further comprises:
- an access control unit that is configured to check whether a further party has met the access condition and if that is case, to enable said party to contact the user.

In the following, embodiments of the invention will be described with reference to the attached schematic figures. Features which correspond to one another with regard to their type and/or function may be assigned the same reference signs throughout the figures. In the figures,:
- Fig. 1: shows a schematic overview of a system according to an embodiment of the invention; and
- Fig. 2: shows a flow diagram of a method for exchanging data via the system according to Fig. 1.

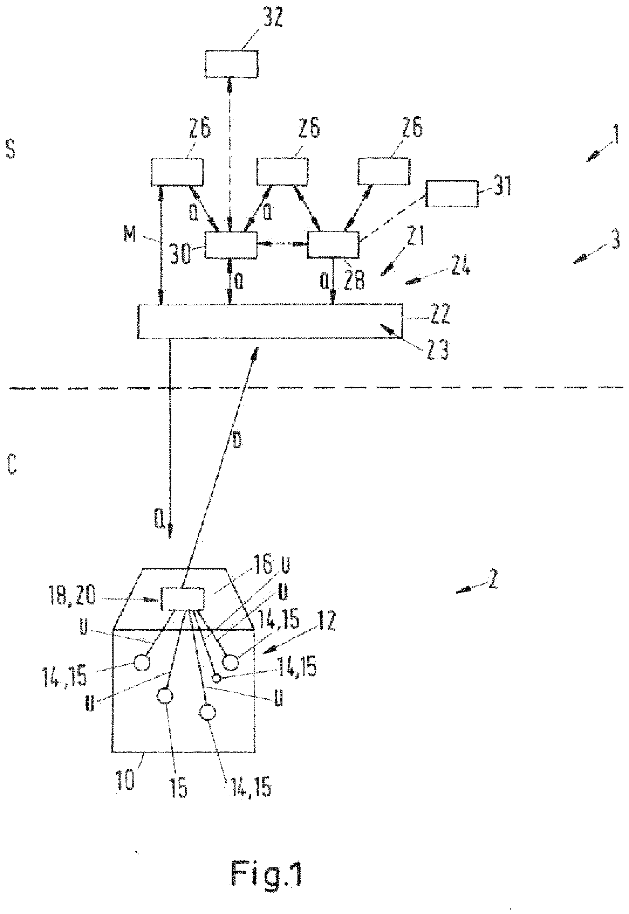

Figure 1 shows a schematic overview of a system 1 according to an embodiment of the invention, which carries out a method according to the invention. Note that in Figure 1 lines or arrows are partially used to indicate data transfers, whereas reference signs associated with said lines or arrows may indicate the type of transferred data.
The system 1 comprises a client side C and a server side S which are separated by a dotted line. On the client side, a building such as a (private) house or home 10 is located. The home 10 comprises an arrangement 2 for accumulating user-related data U, said arrangement 2 comprising a smart home network 12 in which numerous devices 14 and sensing units 15 communicate with a central unit 16 via wireless communication links. The communication links are marked by respective lines between said entities.

Note that in the shown example, only one home 10 is depicted as being connected to the server side S. However, it is also possible to connect a plurality of homes 10 to the server side S in order to accumulate more user-related datasets D and in particular datasets D from various users.

A sensing unit 15, which is provided as hardware components comprising sensors, may sense a state of the environment in which the smart home network 12 is arranged, i.e. a state of the interior and/or the surroundings of the home 10. For example, a sensing unit 15 may sense a temperature, a humidity, a light intensity or the like. Alternatively, a sensing unit 15 may sense a state of the user, such as a physical state of the user. For doing so, a sensing unit may be provided as or integrated into a heart rate monitor or a fitness tracker. In the shown example, there is at least one sensing unit 15 of each of the above described types (i.e. one for sensing the environment and one for sensing a physical state of the user).

Each device 14 likewise comprises a sensing unit 15 which is indicated in figure 1 by using both reference signs for a common item (i.e. 14, 15). The (device) sensing units 15 determine states of the devices, such as power or water consumption or other operating parameters. Example of devices 14 have been given above and e.g. related to TVs, PCs, phones, fridges, stoves or laundry machines. In the context of this example, the device-bound sensing units 15 are considered to sense a state of the environment as well, as the devices form part of the environment (i.e. the home 10) which is covered by the smart home network 12.

Each of the sensing units 15 (also when being integrated into a device 14) send their signals to the central unit 16, said signals comprising initial data related U to a user. The data U of a sensing unit 15 may be referred to as initial or raw data, since they have not been analysed yet with regard to which the demand of a user they might indicate.
In the shown example, a user may be the person or group of persons living in the home 10. Alternatively, the smart home network 12 may be regarded as a user which is operated or, differently put, associated with at least one person (i.e. the person(s) living in the home 10 and using the smart home network 12). The central unit 16 may also be referred to as or comprise a gateway since it communicates with the server side S as indicated by a respective arrow. This will be further discussed below. Generally, the central unit 16 may be or comprise a software application that is e.g. run on a PC or smartphone.

The central unit 16 comprises an analysing unit 18 as well as a dataset generating unit 20. The user may generally determine, which type of central unit 16 and/or analysing unit 18 he installs in order to receive and/or analyse the data U of the numerous sensing units 15. The user may also select various settings of the central unit 16 and/or analysing unit 18 in particular with regard to which initial data U should be considered. Also, the user may rate the performance of the central unit 16 and/or analysing unit 18 in order to provide feedback.

Generally, the analysing unit 18 is configured to accumulate and analyse the data U produced by the sensing units 15. More precisely, the analysing unit 18 may (e.g. based on learned behavioural patterns that are stored in a knowledge database) analyse the data U and identify a potential current demand of the user. For example, based on data U indicating a certain number of persons present in the home 10 and connected to the smart home network 12 (e.g. via their smartphones, fitness trackers or the like), a certain time of the day as well as a so far not used state of kitchen devices, the analysing unit 18 may identify the potential demand to order food for said number of persons within a certain timeframe. The analysing unit 18 may also identify further potential details with regard to said demand, such as the user typically ordering Italian food, the user typically ordering food with a certain price range (e.g. premium or fast food) or the user being likely to order drinks as well.

This way, data on a potential demand are produced, said demand being marked by numerous levels of detail (e.g. the type of item to be ordered (food), the number of persons, the timeframe, the preferred choice of food (Italian or French), the preferred price range and the user being interested in ordering drinks as well).

The dataset generating unit 20 then generates a dataset D including the data on the potential demand. Typically, one dataset D relates to only one identified potential demand (but may relate to a plurality of demands as well). The dataset D can also be referred to as a smart contract. It comprises a not access restricted part which may also be referred to as a public part. Further, it comprises an access restricted part which may also be referred to as a private part.

The not access restricted part comprises information (i.e. data) on the potential demand and specifically on the type of demand. In the present case, this relates to the type of item to be ordered, i.e. food. The access restricted part comprises the further levels of detail with regard to said demand as exemplified above. Since these details likewise relate to the demand identified for the user, they may be considered as (at least indirectly) relating to the user as well (i.e. by further specifying the user's demand). Moreover, these information may include data on the user as such, such as his contact details or the exact or approximate location of the home 10. Overall, the access restricted information may thus allow an interested further party to prepare a more accurate offer or advertisement for the user and/or to contact the user.

The access restriction is realised as an access condition that has to be met in order to access the initially restricted data. In the shown example, the access condition is associated with a monetary value, i.e. a price that has to be paid by a further party. Again, the user may set a level of automation with regard to setting the price of the access condition. For example, this may be done fully automatically by the central unit 16 (or analysing unit 18 and/or dataset generating unit 20). Alternatively, this may be done based on conditions a user has set (e.g. certain prices to be paid for certain identified potential demands). Also, a user may manually set a price for at least some or each of the datasets.

As soon as a demand has been identified and/or as soon as a dataset D has been generated, these may be transferred to the server side S and thereby be published. It is also possible that the user is informed about a demand being identified and/or a dataset D being generated. He may then e.g. decide whether the demand is correct, rate the analysing unit 18 and/or allow the dataset to being sent to the server side S. In general, it is up to the user to set a level of automation with regard to datasets D being published and also setting prices for the access condition. For example, the user may set conditions according to which a dataset D is automatically published, may determine that all datasets D are automatically published or may prohibit certain datasets D (e.g. relating to certain demands) from being published.

In general, as part of a setting of the analysing unit 18, the user may also determine when and which sensing units 15 are considered for determining a demand and/or which type of demands may be identified.

The central unit 16 then forwards the datasets D to the server side S. This may be done via a communication link and in particular a data exchange connection, internet connection or mobile communication connection. Said communication link may be permanently active and present (e.g. as long as the smart homework network 12 is operated) or may only selectively be activated, for example upon a respective user command or when a dataset D is to be published.

Alternatively, the central unit 16 and/or the smart home network 12 as such may be disconnected from further external communication links and/or networks and, in particular, may be operated mostly or even fully in an off-line manner. This helps to protect the user's privacy and to avoid undesired access to the smart home network 12 from outside. For forwarding datasets D to the server side S, the datasets D may be stored on a storage medium being first connected to the central unit 16 and then connected to the server side S. Such a storage medium may e.g. be a USB, a smartphone or the like. In this case, the client side C may be operated similar to a so-called sandbox.

In general, the above described solution ensures that the actual raw data U gathered by the sensing units 15 are largely or even fully kept separately from the information contained in the datasets D. Moreover, the user may be in full control regarding which datasets D are actually published. Still further, only certain parts of the published datasets D are not access restricted and thus publicly available. Also, with help of a data exchange handler 24 discussed below the user can remain fully anonymous at least until he has accepted an offer from one of the providers 26. Each of the above aspects help to secure the user's privacy.

The server side S comprises an arrangement 3 for accessing user-related data, said arrangement 3 comprising a digital marketplace 21 that is run on a data exchange server 22. The digital marketplace 21 is realised as a database in which the datasets D from the home 10 (or a plurality of homes) are gathered. The data exchange server 22 also comprises software applications, such as a data exchange handler 24 discussed below.

Still further, the data exchange server 22 comprises at least one data processing unit, such as a micro-processor.

The data exchange server 22 is accessible via numerous communication links (e.g. via internet) and in particular by further parties in form of goods or service providers 26. These may browse the digital marketplace 21 and search for datasets D that match their interests. Specifically, they may formulate search requests or manually browse the datasets D in the digital marketplace 21 while having only access to the public part of said datasets D. This is indicated by an arrow M between one of the providers 26 and the data exchange server 22. It is to be understood that the providers 26 will typically interact with the further components of the system 1 via electronic/digital units, such as PCs or smartphones, which is why they are represented as simple blocks in figure 1.

If a provider 26 wants to access the access restricted information of a dataset D, he has to pay the price associated with the access condition. A respective payment can be transferred via the data exchange server 22 to an account associated with the user. Whether or not the access condition has been met can be determined via an access control unit 23, which may be a software application e.g. run on the data exchange server 22. Note that in this context, it is generally preferred that the provider 26 only gains access to initially access restricted data relating to the demand information of the user. The datasets D may also contain administrative data (e.g. a management data overhead) which may e.g. be used for managing data transactions between the server and/or client side. Such data are necessary for the correct data exchanges, but may not be of interest to a provider 26 and may thus generally not be accessible (i.e. not be writable and/or readable) even after having made the required payment.

In the shown example, the access condition allows the provider 26 not only to access the further information, but also to contact the user (i.e. the provider 26 only being able and authorized to contact the user if he has satisfied the access condition). Specifically, the initially access restricted information of the dataset D may contain the full contact details, so that when having met the access condition, a provider 26 can directly contact the user associated with the dataset D, for example in order to send him a (digital) offer or advertisement to his smartphone.

Alternatively, the initially access restricted information may comprise a code or other authorisation means which allow the provider 26 to contact the user. For example, the data exchange handler 24 may act as a communication agent between the providers 26 and a user. That is, after having satisfied the access condition and receiving an authorisation code, the provider 26 may send data Q to the data exchange server 22 including said authorisation code. In figure 1, some (but not all) possible communication paths for sending such data Q have been marked with a respective reference sign. This is recognised by the data exchange handler 24 which then forwards the data Q to the user. For doing so, the data exchange handler 24 may decrypt the user's contact data included in the authorisation code and/or gain access to such data stored in an otherwise non-accessible part of the associated dataset. The communication via the data exchange handler 24 has the advantage that the contact details of the user can remain largely or fully anonymous from a provider's point of view. Note that a further alternative in which the data exchange handler 24 communicates with an intermediate registration server is equally possible and is discussed in the general part of this description.

Again, a user may determine which of the above alternatives he allows . For example, for privacy-sensitive demands, such as financial or medical demands, the latter alternative including authorisation codes might be preferred. On the other end, for ordering everyday items, it may be acceptable to include full contact data in the dataset. Therefore, it may be up to the user to set privacy requirements.

It is to be noted that the access restriction may also have numerous levels. Depending on the paid price, a certain level of the access restriction will be met and an associated number of information will be made available to the provider 26. For example, if paying a minimum price, only one additional detail will be provided, whereas if paying a maximum price, all of the previously access restricted data will become available. Coming back to the above noted example, at a first price level, the information that the user prefers Italian or French food will be provided, at a second price level, the information of the first price level as well as the information regarding the number of persons will be provided and so on. The more information are available, the better the chances for preparing an actually relevant offer.

As indicated by an arrow Q (which could also start at the provider 26 in case the datasets include full contact data when having met the access condition), data may be transferred by the providers 26 from the server side S to the client side C and specifically to a user associated with a certain dataset. The transferred data Q may be (digital) offers or advertisements. The data Q may be sent to the central unit 16 and e.g. be forwarded to a device 14 of the smart home network 12. Additionally or alternatively, the data Q may be sent to a device that is not connected to the central unit 16 or smart home network 12, such as user's smartphone. This has the advantage that the smart home network 12 may stay largely or fully off-line. Access to the smartphone can be provided by way of contact details included and optionally encrypted within the dataset.

In the shown example, an access condition to a dataset D can be satisfied by a plurality of providers 26. Thus, upon having published a dataset D in the digital marketplace 21, a user can receive numerous offers from a plurality of providers 26 to choose from.

As an example, a provider 26 may be a food delivery service and wish to provide advertisements to users which have a potential demand for ordering food. Only after the provider 26 has paid for the datasets D related to such a demand, the access condition is met and the provider 26 can contact (directly or indirectly via the data exchange handler 24) the respective users and send them the advertisement. This way, the provider 26 has a higher chance of advertising to actually interested users, whereas the users financially profit due to the provider 26 paying for satisfying the access conditions.

In the embodiment, further optional aspects are shown for bringing providers 26 and users together.

First of all, an optional aggregating unit 28 is shown which is a software application that may e.g. be run on the data exchange server 22 or on a separate server connected thereto. The aggregating unit 28 bundles datasets D of the digital marketplace 21 according to predefined rules. For example, the aggregating unit 28 may bundle datasets D according to the demands described in the not access restricted parts thereof. This way, the aggregating unit 28 may perform a preselection in order to offer providers 26 a list or bundle of potentially relevant datasets D. The aggregating unit 28 may, by way of as such known publish-subscribe relations, inform the service providers 26 about the occurrence of predetermined events, such as the successful bundling of a minimum number of potentially relevant datasets D. Alternatively, an equally known polling relation may be defined, according to which the service providers 26 may check the activities of the aggregating unit 28 themselves and/or gain insight into the currently bundled datasets D.

The goods and/or service providers 26 may generally define interest profiles which include information on the type of datasets D (i.e. the type of demands) they are interested in. These interest profiles may be forwarded to the aggregating unit 28 in order to perform a preselection. The providers 26 may then purchase the datasets D all at once, for example, in case they wish to provide an advertisement to a number of potentially interested users.

The aggregating unit 30 may also be connected to other services 31 which are interested in at least the not access restricted parts of the datasets D, e.g. to perform statistical evaluations thereof.

As a further optional aspect, a so-called intelligent agent 30 is depicted in figure 1. Again, said intelligent agent 30 is a software application that may e.g. be run on the data exchange server 22 or on a separate server connected thereto. The intelligent agent 30 generally seeks to identify providers 26 for purchasing the datasets D provided by a user. Since the user profits from the intelligent agent 30, a share of the payment of a provider 26 to satisfy the access condition can thus be transferred to the intelligent agent 30 or to an hierarchically or otherwise organised plurality of agents (i.e. the user paying the agent(s) to find providers 26 which purchase the user's datasets).

The intelligent agent 30 may e.g. comprise or be connected to a database including information on providers 26 and their interest profiles. The intelligent agent may actively contact providers 26 and offer them datasets D. The intelligent agent 30 may also be connected to other services 32, such as B2B networks, or simply perform internet searches for identifying potential dataset-purchasers.

The intelligent agent 30 can also actively purchase datasets D himself and e.g. bundle them or the access and/or non-access restricted information contained therein and offer such processed datasets D (but also non-processed datasets D) to providers 26. Still further, the Intelligent agent 30 may create new datasets D (i.e. new smart contracts) e.g. based on purchased and processed datasets D. He may increase the price for the access condition in order to compensate for the payment he had to make in order to purchase the datasets D. Note that the intelligent agent 30 may also interact with the aggregating unit 28.

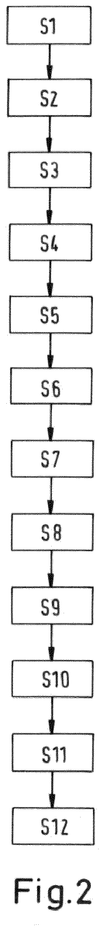

Figure 2 shows a flow diagram for a method that can be carried out with the system 1 of figure 1. In step S1, the sensing units 15 generate initial data U. This process may be continuously performed. In step S2, the sensing units 15 forward the data U to the central unit 16. This may be done continuously or regularly e.g. after a certain time interval has elapsed and/or after a certain minimum number of data U has been generated. In step S3, the analysing unit 18 accumulates and analyses the initial data U and identifies a potential demand of the user along with further details thereof. In step S4, the dataset generating unit 20 generates a dataset D including the above-described access restriction according to which only the potential demand is publicly accessible, but not the further details thereof. At a step S5, a price level for the access condition is set, either by the user or e.g. by the dataset generating unit 20.

At a step S6, the generated dataset D is forwarded to the digital marketplace 21. At a step S7, a provider 26 formulates a search request for browsing the datasets D within the digital marketplace 21. At a step S8, a provider 26 selects one of the datasets D of the search results and makes a payment in order to satisfy the access condition. In step S9, the access restriction is thus removed, e.g. by a respective software function included in the digital marketplace 21, and the provider 26 has access to all of the previously access restricted data. The provider 26 then prepares a detailed offer based on the available information and, in step S10, contacts the user associated with the dataset D either directly or indirectly via the data exchange handler 24.

The user receives this offer, e.g. as a digital offer on his smartphone, and may generally receive a plurality of offers if more than one provider 26 has paid for the dataset D. Note, however, that according to a preferred embodiment, one provider 26 may contact a user only once after having paid for the dataset D. This can be ensured by a respective check performed by the data exchange handler 24 or by the by user's device that receives the offer, said device e.g. having blocking functionalities with regard to numerous similar offers by the same provider 26 within a certain time span.

In a step S12, the user then selects an offer, so that a common ordering process between the user and the provider 26 is initiated.

## Claims

1. A Method for accumulating user-related data,
comprising the steps:
- accumulating initial data (U) related to a user;
- analyzing said initial data (U) and deriving at least one potential demand of the user;
- generating a dataset (D) including information on the potential demand as well as at least some further information related to the user,
wherein generating the dataset (D) includes providing an access restriction, so that the information on the potential demand is accessible by further parties (26), but that at least some of the further information of the dataset (D) are only accessible when an access condition has been met,
wherein the method further comprises:
- forwarding the dataset (D) to a digital marketplace (21).

2. The method of claim 1,
wherein the initial data (U) comprise at least one of:
- data relating to the behaviour of the user;
- data relating to the state of an environment associated with the user;
- data relating to a physical state of the user.

3. The method of claim 1 or 2,
wherein at least some of the initial data (U) are accumulated with help of at least one sensing unit (15) provided within a defined region and in particular within at least one of a building (10), an office space or a living space.

4. The method according to any of the previous claims,
wherein at least some of the initial data (U) are kept separate from the generated dataset (D) and/or the digital marketplace (21).

5. The method according to any of the previous claims,
wherein an analysis result of the initial data (U) is included in the generated dataset (D), but not the initial data (U) themselves.

6. The method according to any of the previous claims,
wherein the access condition is associated with a monetary value.

7. The method of claim 6,
wherein the monetary value is determined according to one of the following:
- an automatic value determination;
- a value determination that is at least partially based on conditions defined by the user;
- a definition of said value by the user.

8. The method according to any of the previous claims,
wherein the access condition has numerous levels, each associated with a defined monetary value, and wherein the information of the dataset (D) are accessible depending on which level of the access condition has been met.

9. The method according to any of the previous claims,
wherein the dataset (D) comprises a confidence information relating to a level of confidence with regard to the derived potential demand;
and preferably, wherein said confidence information is not access restricted.

10. A method for accessing user-related data,
comprising the steps:
- gathering datasets (D) in a digital marketplace (21), each dataset (D) including information on a potential demand of a user as well as further information related to said user and each dataset (D) including an access restriction, so that the information on the potential demand is accessible by further parties (26), but that at least some of the further information are only accessible when an access condition has been met; and
- checking whether a further party (26) has met the access condition and if that is the case, providing access to said further information.

11. The method of claim 10,
wherein, when the access condition is met, the further party (26) is enabled to contact the user by gaining access to contact information of said user and/or by a data exchange handler (24) that forwards data of said party (26) to the user.

12. The method of claim 10 or 11,
further comprising the step:
identifying datasets (D) that might be of interest to a party (26) based on an interest profile of said party (26).

13. The method according to any of claims 1 to 9 or according to any of claims 10 to 12, wherein a level of automation can be set for at least one of the method steps.

14. Method for exchanging user-related data,
comprising the steps:
- accumulating initial data (U) related to a user;
- analyzing said initial data (U) and deriving at least one potential demand of the user;
- generating a dataset (D) including information on the potential demand as well as at least some further information related to said user,
wherein generating the dataset (D) includes providing an access restriction, so that the information on the potential demand is accessible by further parties, but that at least some of the further information of the dataset (D) are only accessible when an access condition has been met,
wherein the method further comprises:
- forwarding the dataset (D) to a digital marketplace (21); and
- checking whether a further party (26) has met the access condition and if that is case, providing access to said further information of the dataset (D).

15. Arrangement (3) for accumulating user-related data,
comprising:
- at least one sensing unit (15) that is configured to accumulate initial data (U) related to a user;
- an analyzing unit (18) that is configured to analyze said initial data (U) and to derive at least one potential demand of the user;
- a dataset generating unit (20) that is configured to generate a dataset (D) which includes information on the potential demand as well as at least some further information related to said user,
wherein the dataset generating unit (20) is further configured to provide an access restriction, so that the information on the potential demand is accessible by further parties (26), but that at least some of the further information of the dataset (D) are only accessible when an access condition has been met, and
wherein the arrangement (3) is further configured to forward the dataset (D) to a digital marketplace (21).

16. Arrangement (2) for accessing user-related data,
comprising:
- a digital marketplace (21) configured to gather datasets (D), each dataset (D) including information on a potential demand of a user as well as further information related to said user and each dataset (D) including an access restriction, so that the information on the potential demand is accessible by further parties (26), but that at least some of the further information are only accessible when an access condition has been met; and
- an access control unit (23) that is configured to check whether a further party (26) has met the access condition and if that is case, providing access to said further information.

17. System (1) for exchanging user-related data,
comprising:
- at least one sensing unit (15) that is configured to accumulate initial data (U) related to a user;
- an analyzing unit (18) that is configured to analyze said initial data (U) and to derive at least one potential demand of the user;
- a dataset generating unit (20) that is configured to generate a dataset (D) which includes information on the potential demand as well as at least some further information related to said user,
wherein the dataset generating unit (20) is further configured to provide an access restriction, so that the information on the potential demand is accessible by further parties (26), but that at least some of the further data of the dataset (D) are only accessible when an access condition has been met,
wherein the dataset generating unit is further configured to forward the dataset (D) to a digital marketplace (21) comprised by the system (1),
and wherein the system (1) further has:
- an access control unit (23) that is configured to check whether a further party (26) has met the access condition and if that is case, to enable said party (26) to contact the user.

## Amended claims

### Amended claims in accordance with Rule 137(2) EPC.

1. A Method for accumulating user-related data,
comprising the steps:
- accumulating initial data (U) related to a user by means of at least one sensing unit (15);
and **characterized by**:
- analyzing said initial data (U) and deriving at least one potential demand of the user by means of an analyzing unit (18);
- generating, by means of a dataset generating unit (20), a dataset (D) including information on the potential demand as well as at least some further information related to the user,
wherein generating the dataset (D) by means of the dataset generating unit (20) includes providing an access restriction, so that the information on the potential demand is accessible by further parties (26), but that at least some of the further information of the dataset (D) are only accessible when an access condition has been met,
wherein the sensing unit (15), the analyzing unit (18) and the dataset generating unit (20) are part of an arrangement (2) in form of a computer system or computer network,
wherein the method further comprises:
- forwarding the dataset (D) by means of the arrangement (2) to a digital marketplace (21).

2. The method of claim 1,
wherein the initial data (U) comprise at least one of:
- data relating to the behaviour of the user;
- data relating to the state of an environment associated with the user;
- data relating to a physical state of the user.

3. The method of claim 1 or 2,
wherein the at least one sensing unit (15) is provided within a defined region and in particular within at least one of a building (10), an office space or a living space.

4. The method according to any of the previous claims,
wherein at least some of the initial data (U) are kept separate from the generated dataset (D) and/or the digital marketplace (21).

5. The method according to any of the previous claims,
wherein an analysis result of the initial data (U) is included in the generated dataset (D), but not the initial data (U) themselves.

6. The method according to any of the previous claims,
wherein the access condition is associated with a monetary value.

7. The method of claim 6,
wherein the monetary value is determined according to one of the following:
- an automatic value determination;
- a value determination that is at least partially based on conditions defined by the user;
- a definition of said value by the user.

8. The method according to any of the previous claims,
wherein the access condition has numerous levels, each associated with a defined monetary value, and wherein the information of the dataset (D) are accessible depending on which level of the access condition has been met.

9. The method according to any of the previous claims,
wherein the dataset (D) comprises a confidence information relating to a level of confidence with regard to the derived potential demand;
and preferably, wherein said confidence information is not access restricted.

10. A method for accessing user-related data,
**characterized by** the steps:
- gathering datasets (D) in a digital marketplace (21), each dataset (D) including information on a potential demand of a user as well as further information related to said user and each dataset (D) including an access restriction, so that the information on the potential demand is accessible by further parties (26), but that at least some of the further information are only accessible when an access condition has been met; and
- checking, by means of an access control unit (23) that is part of a computing unit, whether a further party (26) has met the access condition and if that is the case, providing access to said further information.

11. The method of claim 10,
wherein, when the access condition is met, the further party (26) is enabled to contact the user by gaining access to contact information of said user and/or by a data exchange handler (24) that forwards data of said party (26) to the user.

12. The method of claim 10 or 11,
further comprising the step:
identifying datasets (D) that might be of interest to a party (26) based on an interest profile of said party (26).

13. The method according to any of claims 1 to 9 or according to any of claims 10 to 12,
wherein a level of automation can be set for at least one of the method steps.

14. Method for exchanging user-related data,
comprising the steps:
- accumulating initial data (U) related to a user by means of at least one sensing unit (15);
and **characterized by**:
- analyzing said initial data (U) and deriving at least one potential demand of the user by means of an analyzing unit (18);
- generating, by means of a dataset generating unit (20) a dataset (D) including information on the potential demand as well as at least some further information related to said user,
wherein generating the dataset (D) by means of the dataset generating unit (20) includes providing an access restriction, so that the information on the potential demand is accessible by further parties, but that at least some of the further information of the dataset (D) are only accessible when an access condition has been met,
wherein the sensing unit (15), the analyzing unit (18) and the dataset generating unit (20) are part of an arrangement (2) in form of a computer system or computer network,
wherein the method further comprises:
- forwarding the dataset (D) by means of the arrangement (2) to a digital marketplace (21); and
- checking, by means of an access control unit (23) that is part of a computing unit whether a further party (26) has met the access condition and if that is case, providing access to said further information of the dataset (D).

15. Arrangement (2) in form of a computer system or a computer network for accumulating user-related data,
comprising:
- at least one sensing unit (15) that is configured to accumulate initial data (U) related to a user;
**characterized by** further comprising:
- an analyzing unit (18) that is configured to analyze said initial data (U) and to derive at least one potential demand of the user;
- a dataset generating unit (20) that is configured to generate a dataset (D) which includes information on the potential demand as well as at least some further information related to said user,
wherein the dataset generating unit (20) is further configured to provide an access restriction, so that the information on the potential demand is accessible by further parties (26), but that at least some of the further information of the dataset (D) are only accessible when an access condition has been met, and
wherein the arrangement (2) is further configured to forward the dataset (D) to a digital marketplace (21).

16. Arrangement (3) for accessing user-related data,
**characterized by** comprising:
- a digital marketplace (21) configured to gather datasets (D), each dataset (D) including information on a potential demand of a user as well as further information related to said user and each dataset (D) including an access restriction, so that the information on the potential demand is accessible by further parties (26), but that at least some of the further information are only accessible when an access condition has been met; and
- an access control unit (23) that is part of a computing unit and that is configured to check whether a further party (26) has met the access condition and if that is case, providing access to said further information.

17. System (1) for exchanging user-related data,
comprising an arrangement (2) in form of a computer system or a computer network, the arrangement (2) comprising:
- at least one sensing unit (15) that is configured to accumulate initial data (U) related to a user;
and **characterized by** further comprising
- an analyzing unit (18) that is configured to analyze said initial data (U) and to derive at least one potential demand of the user;
- a dataset generating unit (20) that is configured to generate a dataset (D) which includes information on the potential demand as well as at least some further information related to said user,
wherein the dataset generating unit (20) is further configured to provide an access restriction, so that the information on the potential demand is accessible by further parties (26), but that at least some of the further data of the dataset (D) are only accessible when an access condition has been met,
wherein the dataset generating unit (20) is further configured to forward the dataset (D) to a digital marketplace (21) comprised by the system (1),
and wherein the system (1) further has:
- an access control unit (23) that is part of a computing unit and that is configured to check whether a further party (26) has met the access condition and if that is case, to enable said party (26) to contact the user.
